# EUROPÄISCHE PATENTSCHRIFT

(11) **EP 0 450 256 B1**
(45) Veröffentlichungstag und Bekanntmachung des Hinweises auf die Patenterteilung: **26.07.1995**
(21) Anmeldenummer: 90811028.1
(22) Anmeldetag: 27.12.1990
(51) Int. Cl.: G01F 23/28, G01N 21/43

(54) **Lichtleiter-Sonde**
Optical fibre probe
Sonde à fibre optique

(30) Priorität: 02.04.1990 CH 1094/90
(43) Veröffentlichungstag der Anmeldung: 09.10.1991
(73) Patentinhaber: HECTRONIC AG, CH-5200 Brugg (CH)
(72) Erfinder: Forster,Ernst, CH-8048 Zürich (CH); Mäder,Daniel, CH-5236 Remigen (CH)
(74) Vertreter: Frauenknecht, Alois J.

(56) Entgegenhaltungen:
- EP-A- 0 022 374
- EP-A- 0 305 832
- WO-A-84/04384
- CH-A- 644 948
- US-A- 4 320 291
- PATENT ABSTRACTS OF JAPAN Band 9, Nr. 113, (P-356)(1836), 17. Mai 1985; & JP - A - 60000412

## Beschreibung

Die vorliegende Erfindung bezieht sich auf eine Lichtleiter-Sonde gemäss dem Oberbegriff des Patentanspruchs 1.

Lichtleiter-Sonden dieser Art zum Detektieren von Flüssigkeitspegeln sind seit längerer Zeit bekannt und handelsüblich. Sie basieren darauf, dass über einen ersten Lichtwellenleiter zugeführtes Licht vom Sondenkopf in einen zweiten Lichtwellenleiter zurückreflektiert wird, wenn sich der Sondenkopf in freier Umgebung befindet, jedoch nicht mehr reflektiert wird, wenn der Sondenkopf von einer den Brechungsindex des Sondenkopfs ändernden Flüssigkeit umgeben ist.

Eine Lichtleiter-Sonde der eingangs genannten Art ist aus der internationalen Patentanmeldung WO 84/04384 bekannt. Bei der bekannten Sonde sind die beiden Lichtwellenleiter fest in den Bohrungen des Durchführungskörpers angeordnet. Der lichtdurchlässige Sondenkopf weist die Form eines geraden Kegels mit einem Öffnungswinkel von 90 ° auf, dessen der Kegelspitze gegenüberliegende Planfläche durch einen verschraubten Deckel auf ein Gehäuse gedrückt ist, in welches auch der Durchführungskörper eingesetzt ist. Die Planfläche des Sondenkopfs weist dadurch nur einen sehr geringen Abstand zu den Stirnflächen der Lichtwellenleiter auf.

Die bekannten Lichtleiter-Sonden weisen den Nachteil auf, dass die Überführung des Lichts vom einen Lichtwellenleiter zum reflektierenden Sondenkopf sowie die nachfolgende Überführung des reflektierten Lichts in den zweiten Lichtwellenleiter unbefriedigend sind und zudem die Ausrichtung des Strahlengangs zwischen den Lichtwellenleitern und den Reflexionsflächen des Sondenkopfs schwierig ist.

Zum Stand der Technik wird noch auf die nachstehenden Druckschriften verwiesen.

Aus der europäischen Patentanmeldung EP-A-0 305 832 ist ein Steckverbinder für Lichtleiter bekannt, der zwei Steckerteile mit je einem an eine transparente Stirnfläche geführten Lichtleiterabschnitt umfasst. Eine Faserendhülse des Lichtleiterabschnitts fasst mit einem Fortsatz in eine entsprechende Bohrung eines Kugelbetts für eine Glaskugel. Das Kugelbett ist so ausgebildet, dass ein definierter Abstand zwischen der Glaskugel und der Stirnfläche des aktiven Querschnitts des Lichtleiterabschnitts vorliegt. Vorzugsweise befindet sich die Stirnfläche im Brennpunkt der Glaskugel. Die Faserendhülse ist hierbei fest in einem Gehäuse angeordnet.

Aus der CH-PS 644 948 ist in einer Sonde am einen Ende eines zylindrischen Gehäuses eine sphärische Linse angeordnet. In der Längsachse des Gehäuses ist ein Lichtleiterabschnitt derart untergebracht, dass seine Stirnfläche in einem bestimmten Abstand von der Kugelfläche der Linse liegt. Der Lichtleiterabschnitt wird durch eine Klemmvorrichtung in Position gehalten.

Aus der CH-A-657 458 ist ein Endstück für eine Faseroptik bekannt, das es ermöglicht, ein Lichtbündel mit grossem Durchmesser und grossem Öffnungswinkel in eine Faseroptik mit kleinem Durchmesser und kleinem Aperturwinkel einzuleiten. Dieses Endstück benötigt aber einen Hohlspiegel und einen Wölbspiegel, die beide in genauer geometrischer Relation angeordnet sein müssen und nicht den optischen Anforderungen der jeweiligen Sondenverwendung angepasst werden können.

Es ist Aufgabe der vorliegenden Erfindung, eine Lichtleiter-Sonde der eingangs genannten Art zu schaffen, welche bei Vermeidung der angeführten Nachteile unter Anwendung einfacher mechanischer und optischer Mittel eine beliebige Fokussierung des Lichtstrahls bzw. der Lichtstrahlen ermöglicht.

Zur Lösung dieser Aufgabe weist die Lichtleiter-Sonde erfindungsgemäss die im kennzeichnenden Teil des Patentanspruchs angeführten Merkmale auf.

Durch das Längsverstellen der Rohrstücke oder Führungshülsen für die Endbereiche der Lichtwellenleiter und durch die feststehenden Linsenanordnungen, die einfache Glaskugeln aber auch Anordnungen von einzelnen oder mehreren anderen Linsen sein können, lassen sich die Lichtstrahlen in weiten Grenzen je nach den Anforderungen bündeln oder ausweiten.

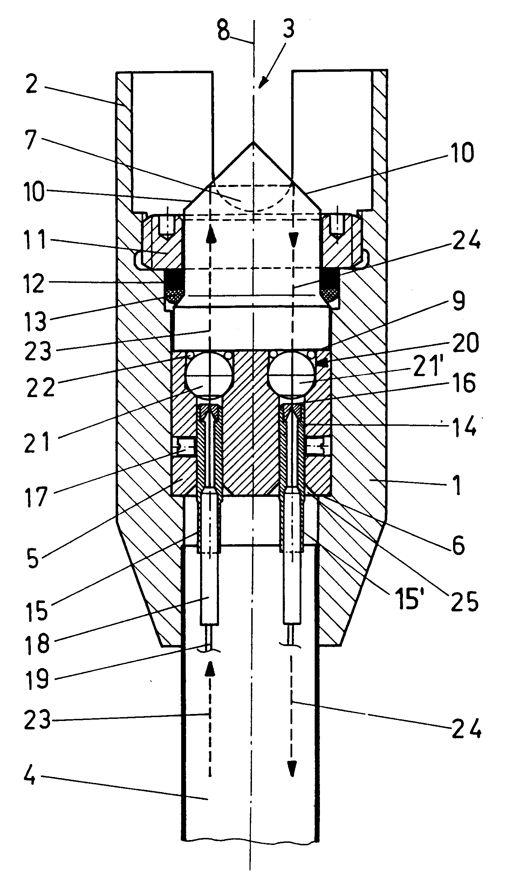

Ein Ausführungsbeispiel der erfindungsgemässen Lichtleiter-Sonde wird nachstehend anhand der einzigen Figur erläutert, welche die Lichtleiter-Sonde in einem Längsschnitt darstellt.

Die Lichtleiter-Sonde weist ein im wesentlichen zylindrisches Gehäuse 1 auf, das in seinem Kopfteil als Schutzhülse 2 ausgebildet ist. Die Schutzhülse 2 ist mit zwei Schlitzen 3 versehen, welche das seitliche Abfliessen des betreffenden, zu sondierenden Mediums im Gebrauch der Lichtleiter-Sonde erlauben. Am anderen Ende ist in das Gehäuse 1 ein Distanzrohr 4 eingesetzt.

In das Gehäuse 1 ist ein Durchführungskörper 5 eingelegt, der sich auf einen Gehäuseabsatz 6 abstützt. Auf dem Durchführungskörper 5 ist ein als Glaskegel ausgebildeter, strahlendurchlässiger, zylindrischer Reflexionskörper 7 angeordnet. Der Reflexionskörper 7 ist an seinem auf dem Durchführungskörper 5 aufliegenden Ende mit einer zu seiner Längsachse 8 senkrecht ausgebildeten, plan geschliffenen Fläche 9 versehen. Das andere Ende des Reflexionskörpers 7 ist dachförmig abgeschrägt, wobei die so vorliegenden Reflexionsflächen 10 senkrecht zueinander stehen. Der Reflexionskörper 7 wird durch eine Mutter 11 auf den Durchführungskörper 5 gedrückt, wobei zwischen der Mutter 11 und einem Ringabsatz des Reflexionskörpers 7 zwei Dichtringe 12 und 13 angeordnet sind. Die Dichtringe 12, 13 haben unterschiedliche physikalische Eigenschaften: Der Dichtring 12 ist ein fester Teflon Ring, während der Dichtring 13 ein elastischer O-Ring ist.

Der Durchführungskörper 5 ist mit zwei bezüglich der Längsachse 8 symmetrischen und genau parallelen Längs-Führungsbohrungen 14 versehen, in welchen je ein Rohrstück 15 für die Fasern je eines Lichtwellenleiters in Längsrichtung verschiebbar angeordnet ist. Jedes Rohrstück 15 ist auf dem Kabelende des betreffenden, im Rohrstück 15 nicht dargestellten Lichtwellenleiters aufgeklebt. Hierbei ist die stirnseitige Oberfläche 16 des Rohrstücks 15 zusammen mit dem Kabelende des Lichtwellenleiters plan geschliffen und poliert. Zur Fixierung der Längslagen der Rohrstücke 15 in den Längsbohrungen 14 ist je eine Stellschraube 17 angeordnet. Die beiden in den Rohrstücken 15 nicht dargestellten Lichtwellenleiter-Kabel sind nur mit ihren aus den Rohrstücken 15 austretenden Kabelbereichen 18 und ihren Fasern 19 gestrichelt angedeutet.

Oberhalb der Längsbohrungen 14 ist der Durchführungskörper 5 mit je einer weiteren zylindrischen Bohrung 20 grösseren Durchmessers versehen. In diese Bohrungen 20 ist je eine, beispielsweise aus Borosilikat bestehende, geschliffene Glaskugel 21 eingelassen. Im dargestellten montierten Zustand werden die Glaskugeln 21, 21′ über je einen O-Ring 22 vom aufgedrückten Reflexionskörper 7 festgehalten. Die Glaskugeln 21, 21′ liegen präzise auf der Längsachse des betreffenden Kollimatorrohrs 15 bzw. 15′.

Das Prinzip der dargestellten Lichtleiter-Sonde beruht auf der Reflexion von Licht bzw. auf der starken Verminderung der Reflexion bei Anwesenheit eines äusseren Mediums, insbesondere einer Flüssigkeit.

Eine nicht dargestellte Infrarot-Diode mit einer Wellenlänge von 850 nm sendet vorzugsweise frequenzmoduliertes Licht über das eine Lichtwellenleiter-Kabel 18 längs dem Lichtweg 23 auf die Lichtleiter-Sonde. Die Faser 19 dieses Kabels hat einen Durchmesser von beispielsweise 200 »m. Das Licht gelangt über ein erstes optisches System mit verstellbarem Kollimatorrohr 15 und zugehöriger Glaskugel 21 zum Reflexionskörper 7. Das aus der Glaskugel 21 austretende Licht tritt in den Reflexionskörper 7 ein und wird im Reflexionskörper 7 von den Reflexionsflächen 10 zweimal umgelenkt. Das reflektierte Licht gelangt dann über ein zweites, mit Glaskugel 21′ und Rohrstück 15′ gleich aufgebautes optisches System längs dem Lichtweg 24 mit praktisch unveränderter Intensität in das andere Lichtwellenleiter-Kabel 18, an welches ein nicht dargestellter Lichtempfänger, zum Beispiel ebenfalls eine Infrarot-Diode, angeschlossen ist.

Durch Verschieben des einen Rohrstücks 15 kann der Lichtstrahl des Lichtwegs 23 auf die erste Reflexionsfläche 10 fokussiert werden. Durch Verschieben des anderen Rohrstücks 15 kann der von der zweiten Reflexionsfläche 10 umgelenkte Lichtstrahl gemäss dem Lichtweg 24 gebündelt werden. Diese doppelte Reflexion tritt dann ein, wenn der Reflexionskörper 7 nur mit der Umgebungsluft in Berührung steht. Ist der Reflexionskörper 7 dagegen in ein Medium, insbesondere in eine Flüssigkeit, eingetaucht, so ändert sich der Brechungsindex an den Reflexionsflächen 10. Dadurch tritt der gesendete Lichtstrahl durch die Reflexionsflächen 10 praktisch vollständig in das umgebende Medium aus, so dass praktisch kein Licht mehr auf das zweite optische System (Lichtweg 24) fällt. Die Abschwächung des Lichts kann etwa zwanzig- bis hundertfach sein.

Die Brennweiten der beiden optischen Systeme lassen sich durch Verschieben ihrer Rohrstücke 15, 15′ nach Belieben einstellen, so dass die beiden Lichtstrahlen gebündelt oder aufgeweitet werden können, was eine mehr oder weniger empfindliche Lichtleiter-Sonde zur Folge hat. Durch entsprechende Einstellung können beispielsweise ohne weiteres Dämpfe detektiert werden, was beim Erhitzen von Flüssigkeiten und bei deren Dampfbildung sehr nützlich sein kann.

Die beschriebenen optischen Systeme weisen je eine Glaskugel 21 als Linsenanordnung auf. Selbstverständlich können auch anders ausgebildete Linsenanordnungen vorgesehen werden, welche zusammen mit den verstellbaren Kollimatorrohren 15 die gewünschte Brennweiteneinstellung ermöglichen. Nach der definitiven Einstellung der Brennweiten werden die durch die Stellschrauben 17 fixierten Rohrstücke 15 vorzugsweise mit dem Durchführungskörper 5 verklebt, wozu dieser mit Aus nehmungen 25 versehen ist.

Sowohl die Infrarot-Sendediode als auch die Infrarot-Empfangsdiode bilden Teile einer an sich bekannten elektronischen Schaltungsanordnung, wobei insbesondere das resultierende elektrische Signal der Empfangsdiode zu Regel-, Schalt- und Steuervorgängen verwendet werden kann. Bei einer mechanischen Beschädigung der Lichtwellenleiter-Kabel oder bei Ausfall der elektronischen Schaltungsanordnung wird von der Schaltungsanordnung wegen des Fehlens eines reflektierten Lichtstrahls bzw. wegen des Ausbleibens seiner Wahrnehmung unabhängig immer ein Störungs- bzw. Alarmsignal erzeugt. Durch die vorzugsweise Verwendung von frequenzmoduliertem Licht hat eine Einwirkung von Fremdlicht, wie beispielsweise von Licht, das von aussen eingestrahlt wird, nur sehr wenig Einfluss auf das Funktionieren der Sonde.

Der beschriebenen Lichtleiter-Sonde wird keine elektrische Energie zugeführt, was im Hinblick auf Explosionsschutz-Anforderungen sehr wichtig ist. Der Aufbau der Sonde ist sehr einfach und stabil. Zudem erlaubt die Ausbildung der von vorne festschraubbaren optischen Systeme ein einfaches Auswechseln defekter Lichtwellenleiter oder eines havarierten Reflexionskörpers und gestattet die Weiterverwendung unbeschädigter Teile der Sonde.

Die Sonde lässt sich in beliebiger Lage in Gefässe und Räume einbauen; bei der Niveau-Detektion von benetzenden Flüssigkeiten wird die Einbaulage vorzugsweise durch das Abtropfverhalten der Flüssigkeit am Sondenkopf experimentell bestimmt.

## Patentansprüche

1. Lichtleiter-Sonde zum optischen Feststellen des Übergangs von einem gasförmigen zu einem flüssigen Medium, mit zwei Lichtwellenleiter (18, 19), deren Endbereiche in parallelen Bohrungen (14) eines in einem Gehäuse (1) gelagerten Durchführungskörpers (5) untergebracht sind und deren Stirnflächen (16) einer Planfläche (9) eines am einen Ende des Gehäuses (1) befestigten und gegen den Durchführungskörper (5) drückbaren, lichtdurchlässigen Sondenkopfs (7) zugewandt sind, wobei der Sondenkopf (7) Reflexionsflächen (10) hat, welche den aus der Stirnfläche (16) des einen Lichtwellenleiters (18, 19) austretenden und auf die Planfläche (9) fallenden Lichtstrahl (23) einer Lichtquelle mehrfach reflektieren, und welche den reflektierten Lichtstrahl (24) aus der Planfläche (9) austreten und auf die Stirnfläche (16) des anderen, zu einem Lichtdetektor geführten Lichtwellenleiters (18, 19) fallen lassen, dadurch gekennzeichnet, dass die Endbereiche der Lichtwellenleiter (18, 19) je in einem Rohrstück (15, 15′) gefasst sind, das in der einen bzw. anderen Bohrung (14) des Durchführungskörpers (5) längsverschiebbar gelagert und je mittels einer Stellschraube (17) in beliebigen Positionen arretierbar ist, und dass in jeder Bohrung (14) des Durchführungskörpers (5) zwischen der Stirnfläche des Lichtwellenleiters (18, 19) und der Planfläche (9) des Sondenkopfs (7) eine Linsenanordnung (21, 21′) unbeweglich untergebracht ist.

2. Lichtleiter-Sonde nach Anspruch 1, dadurch gekennzeichnet, dass die Linsenanordnungen (21, 21′) Glaskugeln sind.

3. Lichtleiter-Sonde nach Anspruch 2, dadurch gekennzeichnet, dass die Glaskugeln (21, 21′) in zylindrischen Ausnehmungen (20) der Bohrungen (14) des Durchführungskörpers (5) gefasst sind.

4. Lichtleiter-Sonde nach einem der Ansprüche 1 bis 3, dadurch gekennzeichnet, dass die Endbereiche der Lichtwellenleiter (18, 19) in den Rohrstücken (15) festgeklebt sind, wobei die Stirnflächen (16) der Rohrstücke (15) zusammen mit den Stirnflächen der Lichtwellenleiter (18, 19) plan geschliffen und poliert sind.

5. Lichtleiter-Sonde nach einem der Ansprüche 1 bis 4, dadurch gekennzeichnet, dass der lichtdurchlässige Sondenkopf (7) aus einem zylindrischen Körper besteht, welcher an seinem äusseren, der Planfläche (9) gegenüberliegenden Ende zur Bildung von zwei senkrecht zueinander stehenden Reflexionsflächen (10) dachförmig abgeschrägt ist.

6. Lichtleiter-Sonde nach einem der Ansprüche 1 bis 5, dadurch gekennzeichnet, dass der Sondenkopf (7) mittels einer in das Gehäuse (1) schraubbaren Mutter (11) auf den Durchführungskörper (5) drückbar ist.

7. Lichtleiter-Sonde nach Anspruch 6, dadurch gekennzeichnet, dass zwischen der Mutter (11) und einer ringförmigen Auflagefläche des Sondenkopfs (7) sowie zwischen der Planfläche (9) des Sondenkopfs (7) und den gegenüberliegenden Linsenanordnungen (21, 21′) des Durchführungskörpers (5) Dichtringe (12, 13, 22) angeordnet sind.

## Claims

1. Glass optical light guide probe for optical determination of the transition from a gaseous medium to a liquid medium with two optical wave guides (18, 19) whose end ranges are placed in parallel bore holes (14) of one of a bushing type body (5) stored in a housing (1) and whose front parts (16) are oriented towards an optical flat (9) of the transparent head of the probe, which is fixed at the end of the housing (1) and is pressible towards the bushing type body (5), whereby the head of the probe (7) comprises reflecting areas (10) which are repeatedly reflecting the light beam of a luminous source emitted from the front parts (16) of one of the optical wave guides (18, 19) and falling on the optical flat (9) and which let to emerge the reflected light beam (24) from the plane face (9) and let it fall on the front part (16) of the other optical wave guide (18, 19) connected to a light detector, characterized in that each of the end ranges of the optical wave guides (18, 19) are mounted in a piece of a pipe (15, 15′) respectivly which is arranged longitudinally shiftable in one or an other bore hole (14) of the bushing type body (5) and is lockable in any positions by means of a binding screw and that in every bore hole (14) of the bushing type body (5) between the front part of the optical wave guide (18, 19) and the optical flat (9) of the head of the probe an arrangement of lenses (21, 21′) is fixed.

2. Glass optical light guide probe according to claim 1, characterized in that the arrangements of lenses (21, 21′) are glass globes.

3. Glass optical light guide probe according to claim 2, characterized in that the glass globes (21, 21′) are mounted in cylindrical recesses (20) of the bore holes (14) of the bushing type body (5).

4. Glass optical light guide probe according to one of the claims 1 to 3, characterized in that the end ranges of the optical wave guides (18, 19) are sticked in the pieces of the pipes (15), whereby the front parts (16) of the pieces of the pipes (15) together with the front parts of the optical wave guides (18, 19) are surface grinded and polished.

5. Glass optical light guide probe according to one of the claims 1 to 4, characterized in that the transparent head of the probe (7) consists of a cylindrical body which is rooflike lightened down on his outer end opposite to the optical flat (9) for the formation of two reflecting areas (10) perpendiculary arranged to each other.

6. Glass optical light guide probe according to one of the claims 1 to 5, characterized in that the head of the probe (7) is pressible on the bushing type body (5) by means of a screw nut (11) screwable in the housing (1).

7. Glass optical light guide probe according to claim 6, characterized in that conical nipples (12, 13, 22) are placed between the screw nut (11) and the ring shaped supporting area of the head of the probe (7) as well as between the plane face (9) of the head of the probe (7) and the opposing arrangement of lenses (21, 21′) of the bushing type body (5).

## Revendications

1. La sonde d'une ligne optique pour la detection de la transition d'un milieu gazéiforme a un milieu liquide avec deux fibres optiques (18, 19) dont les extremites sont placées dans des forages (14) paralleles d'un corps d'execution (5) installe dans une capsule et dont les surfaces frontales (16) sont tournées vers une surface optique (9) d'une tête de sonde (7) transparente fixe au bout de la capsule (1) et pressable contre le corps d'execution (5), la tête de la sonde (7) à des surfaces refléchissantes (10), quelles reflechissent plusieurs fois le rayon luminineux (23) d'une source lumineuse sortant de la surface frontale (16) d'une fibre optique (18, 19) et tombant sur la surface optique (9) et qui laissent sortir le rayon lumineux (24) reflété de la surface optique (9) et laissent tomber sur la surface frontale (16) de l'autre fibre optique conduisant a un detecteur de lumière, caracterisé par la, que les extremités des fibres optiques (18, 19) sont prises dans une piece de tuyau (15, 15′) qui est placé à deplacement longitudinal dans une ou l'autre des forages (14) du corps d'execution (5) et est à arreter au moyen d'une vis de réglage dans des positions quelconques et que dans chaque forage (14) du corps d'execution (5) êntre la surface frontale des fibres optiques (18, 19) et la surface optique (9) de la tête de la sonde une disposition des lentilles (21, 21') est immobilisée.

2. La sonde d'une ligne optique selon la revendication 1, caractérisé par la, que les dispositions des lentilles (21, 21′) sont les boules en verre.

3. La sonde d'une ligne optique selon la revendication 2, caractérisé par la, que les boules en verre (21, 21′) sont prises dans des excavations des forages (14) du corps d'execution (5).

4. La sonde d'une ligne optique selon une des revendications 1 au 3, caractérisé par la, que les extremitées des fibres optiques (18, 19) sont collées dans des pieces des tuyaux (15), a l'occasion de quoi les surfaces frontales (16) des pieces des tuyaux (15) sont ensemble avec les surfaces frontales des fibres optiques (18, 19) taillés en plan et polié.

5. La sonde d'une ligne optique selon une des revendications 1 au 4, caractérisé par la, que la tête de la sonde transparente (7) est formée d'un corps cylindrique qui est à son bout le plus eloigne situé en façe de surface optique (9) chanfreiné en forme de toit pour la formation de deux surfaces réfléchissantes placées perpendiculairement l'une vers l'autre.

6. La sonde d'une ligne optique selon une des revendications 1 au 5, caractérisé pa la, que la tête de la sonde (7) est pressable sur le corps d'execution (5) au moyen d'un ecrou (11) vissable dans la capsule.

7. La sonde d'une ligne optique selon la revendication 6, caractérisé par la, que êntre l'ecrou (11) et la surface annulaire d'appui de la tête de la sonde (7) et aussi êntre la surface optique (9) de la tête de la sonde (7) et la disposition des lentilles (21, 21′) du corps d'execution (5) située en face des bagues d'etanchéité sont arrangées.
